(19)

Europäisches
Patentamt
European
Patent Office
Office européen
des brevets

(11) **EP 3 663 083 A1**

(12) **EUROPEAN PATENT APPLICATION**
published in accordance with Art. 153(4) EPC

(43) Date of publication:
**10.06.2020 Bulletin 2020/24**

(21) Application number: **18841721.6**

(22) Date of filing: **27.07.2018**

(51) Int Cl.:
**B32B 5/26** *(2006.01)*

(86) International application number:
**PCT/JP2018/028291**

(87) International publication number:
**WO 2019/026798 (07.02.2019 Gazette 2019/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2017 JP 2017147795**

(71) Applicants:
• **JNC Corporation
Chiyoda-ku
Tokyo 100-8105 (JP)**

• **JNC Fibers Corporation
Tokyo 100-0004 (JP)**

(72) Inventors:
• **HATTORI Takayuki
Moriyama-shi
Shiga 524-0001 (JP)**
• **NISHIJIMA Masaru
Moriyama-shi
Shiga 524-0001 (JP)**

(74) Representative: **Becker, Eberhard
Becker & Kurig Partnerschaft
Patentanwälte PartmbB
Bavariastrasse 7
80336 München (DE)**

(54) **LAMINATED ACOUSTIC ABSORPTION MEMBER**

(57) The present invention addresses the problem of providing a thin acoustic absorption member that exhibits exceptional sound absorption properties in a low-frequency range, an intermediate-frequency range, and a high-frequency range. A laminated acoustic absorption member including a plurality of fiber layers and a base material layer positioned between the fiber layers, wherein the laminated acoustic absorption member is characterized in that: the laminated acoustic absorption member includes at least two fiber layers; the fiber layers comprise fibers having an average fiber diameter of at least 500 nm and less than 35 $\mu$m, and have a basis weight of 10-500 g/m$^2$, a ventilation rate of 950 $\mu$m/Pa·s or less, and a thickness of less than 2.9 mm; and the base material layer is at least one selected from the group consisting of non-woven fabrics and woven fabrics, and has a basis weight of 80 g/m$^2$ to 800 g/m$^2$ and a thickness of 2.9 mm to 20 mm.

FIG. 1

## Description

[Technical Field]

The present invention relates to an sound absorption member having a laminated structure including a plurality of layers constituted of fibers.

[Background Art]

Sound absorption members are products having a function of absorbing sound and are often used in the field of construction and the field of automobiles. It is known that non-woven fabrics are used as materials for constituting sound absorption members. For example, Patent Literature 1 discloses a multi-layered article having sound absorption properties. The multi-layered article includes a support layer and a submicron fiber layer that is laminated on the support layer. The submicron fiber layer has a central fiber diameter smaller than 1 $\mu$m and an average fiber diameter within a range of 0.5 $\mu$m to 0.7 $\mu$m and is formed by a molten film fibrillation method or an electrospinning method. The example disclosed in Patent Literature 1 is a laminated article in which a polypropylene spunbond non-woven fabric having a grammage (basis weight) of 100 g/m$^2$ and a diameter of approximately 18 $\mu$m is used as a support layer, and submicron polypropylene fibers having basis weights within a range of 14 g/m$^2$ to 50 g/m$^2$ and an average fiber diameter of approximately 0.56 $\mu$m are laminated thereon. In addition, another example disclosed therein is a multi-layered article in which electrospinning polycaprolactone fibers having basis weights within a range of 6 g/m$^2$ to 32 g/m$^2$ and an average fiber diameter of 0.60 $\mu$m are laminated on a polyester card processing web having a basis weight of 62 g/m$^2$. Sound absorption characteristics of the multi-layered articles prepared in the examples are measured, and the results indicate that the sound absorption characteristics of the multi-layered articles are more exceptional than the sound absorption characteristics of a multi-layered article having only a support.

In addition, Patent Literature 2 discloses a laminated non-woven fabric having exceptional sound absorption properties. The laminated non-woven fabric has a surface layer part that includes at least two kinds of non-woven fabric layers, and a base part. The two kinds of non-woven fabric layers included in the surface layer part include a non-woven fabric layer (1) constituted of nanofibers having single fiber diameters within a range of 1 nm to 500 nm, and a non-woven fabric layer (2) constituted of fibers larger than the nanofibers. The surface layer part of Patent Literature 2 is characterized in that the non-woven fabric layers (1) and (2) are combined. Patent Literature 2 discloses that the non-woven fabric layer (1) manages sound absorption properties and the non-woven fabric layer (2) can manifest a mechanical strength while the sound absorption properties are maintained. In an example, it is described that a surface layer part having a basis weight of 72 g/m$^2$ is constituted of a layer having short fiber diameters of 200 nm and a layer having short fiber diameters of 2 $\mu$m in combination. In addition, in the example, it is described that a base layer includes fibers of 10 mass% or more having basis weights within a range of 200 g/m$^2$ to 800 g/m$^2$ and single fiber diameters of 15 $\mu$m or smaller, and sound absorption properties of a non-woven fabric of the base layer can be improved due to the fibers which have single fiber diameters of 15 $\mu$m or smaller and are included in the base layer.

Patent Literature 3 discloses a multi-layer forming sheet used as an automobile insulator. In the multi-layer sheet of Patent Literature 3, a first porous sheet and a second porous sheet are fused and integrated due to a melt-blown non-woven polypropylene fabric inserted therebetween. Examples of the first porous sheet and the second porous sheet include adhesive-interlaced non-woven fabric sheets formed of short fibers and a glass wool mat sheet. Since a dense melt-blown non-woven polypropylene fabric having a low ventilation rate is inserted therebetween and a fabric having an average fiber diameter of 2 $\mu$m or smaller is used as the melt-blown non-woven fabric, it is assumed that distribution of the fibers becomes uniform and physical properties of a low ventilation rate of the melt-blown non-woven fabric can be transferred even if it is melted during molding.

[Citation List]

[Patent Literature]

[Patent Literature 1]
Japanese Patent Laid-Open No. 2014-15042
[Patent Literature 2]
Japanese Patent Laid-Open No. 2015-30218
[Patent Literature 3]
Japanese Patent Laid-Open No. 2016-137636

[Summary of Invention]

[Technical Problem]

As described above, non-woven fabric laminates having various constitutions have been investigated as sound absorption members, and combining a plurality of layers having different fiber diameters and ventilation rates (densities) is combined is also known. However, particularly regarding sound absorption members for automobiles, there has been a demand for sound absorption members having more exceptional sound absorption characteristics, particularly sound absorption members which exhibit exceptional sound absorption performance in a low-frequency range of 200 Hz to 1,000 Hz, an intermediate-frequency range of 800 Hz to 2,000 Hz, and a high-frequency range of 2,000 Hz to 5,000 Hz and which is also exceptional in space saving. In consideration of such circumstances, according to an objective of the present invention, an sound absorption member which has exceptional sound absorption properties in a low-frequency range, an intermediate-frequency range, and a high-frequency range and is also exceptional in space saving is provided.

[Solution to Problem]

The inventors have conducted many investigations to resolve the objective described above. As a result, the inventors have found that the foregoing objective can be resolved when a laminated sound absorption member including a base material layer and fiber layers has a structure including a plurality of dense fiber layers that have fiber diameters and basis weights within a particular range, and a coarse base material layer that is positioned therebetween and has a uniform basis weight and a uniform thickness, and thus completed the present invention.
The present invention has the following constitution.

[1] A laminated sound absorption member includes a plurality of fiber layers, and a base material layer that is positioned between a fiber layer and another fiber layer. The laminated sound absorption member includes at least two fiber layers. Each of the fiber layers is constituted of fibers having an average fiber diameter within a range of 500 nm to smaller than 5 $\mu$m, basis weights within a range of 10 g/m$^2$ to 500 g/m$^2$, and ventilation rates of 950 $\mu$m/Pa·sec or lower. A thickness is smaller than 2.9 mm. The base material layer is at least one selected from the group consisting of a non-woven fabric and a woven fabric and has a basis weight within a range of 80 g/m$^2$ to 800 g/m$^2$ and a thickness within a range of 2.9 mm to 20 mm.
[2] In the laminated sound absorption member according to [1], the fiber layers have basis weights within a range of 10 g/m$^2$ to 200 g/m$^2$, and the base material layer has a basis weight within a range of 80 g/m$^2$ to 500 g/m$^2$.
[3] In the laminated sound absorption member according to [1] or [2], the thickness is 30 mm or smaller.
[4] In the laminated sound absorption member according to any one of [1] to [3], fibers forming the fiber layers are constituted of at least one selected from the group consisting of polyethylene, polypropylene, polyethylene terephthalate, polybutylene terephthalate, polytetrafluoroethylene, polyvinylidene fluoride, nylon 6,6, polyacrylonitrile, polystyrene, polyurethane, polysulfone, and polyvinyl alcohol.
[5] In the laminated sound absorption member according to any one of [1] to [4], a base material included in the base material layer is a non-woven fabric constituted of at least one selected from the group consisting of polyethylene terephthalate fibers, polybutylene terephthalate fibers, polyethylene fibers, polypropylene fibers, and glass fibers.
[6] In the laminated sound absorption member according to any one of [1] to [5], in a vertical incident sound absorption coefficient measurement method, a sound absorption coefficient at a frequency x within a range of 200 Hz to 3,200 Hz is measured at intervals of 1 Hz, and when an obtained curve is f(x), an integrated value S within a range of 200 Hz to 1,000 Hz is within a range satisfying the following expression.

$$S = \int_{200}^{1000} f(x)\,dx \geqq 170$$

[7] In the laminated sound absorption member according to any one of [1] to [6], in a vertical incident sound absorption coefficient measurement method, a sound absorption coefficient at a frequency x within a range of 200 Hz to 3,200 Hz is measured at intervals of 1 Hz, and when an obtained curve is f(x), an integrated value T within a range of 800 Hz to 2,000 Hz is within a range satisfying the following expression.

$$T = \int_{800}^{2000} f(x)\,dx \geqq 840$$

[8] In the laminated sound absorption member according to any one of [1] to [7], in a vertical incident sound absorption coefficient measurement method, a sound absorption coefficient at a frequency x within a range of 200 Hz to 5,000 Hz is measured at intervals of 3.6 Hz, and when an obtained curve is f2(x), an integrated value U within a range of 2,000 Hz to 5,000 Hz is within a range satisfying the following expression.

$$U = \int_{2000}^{5000} f_2(x)\,dx \;\geqq\; 2100$$

[Advantageous Effects of Invention]

According to the present invention having the constitution described above, since the fiber layers and the base material layer having a particular constitution are provided in the laminated sound absorption member, high sound absorption properties can be realized with fewer layers, and thus the thickness of the sound absorption member can be reduced. In addition, according to the present invention having the constitution described above, an sound absorption member having exceptional sound absorption characteristics in a low-frequency range, an intermediate-frequency range, and a high-frequency range can be obtained. The laminated sound absorption member of the present invention has a peak of sound absorption characteristics in a range lower than those of sound absorption members in the related art and has exceptional sound absorption performance in a range of 2,000 Hz or lower, particularly in a range of 1,000 Hz or lower. It is said that a greater part of ambient noise is within a range of approximately 200 Hz to 500 Hz in the field of construction. In addition, it is said that road noise is within a range of approximately 100 Hz to 500 Hz, noise during acceleration or during shifting of a transmission is within a range of approximately 100 Hz to 2,000 Hz, and wind noise during traveling of a vehicle is within a range of approximately 800 Hz to 2,000 Hz in the field of automobiles. The laminated sound absorption member of the present invention is a useful countermeasure for noise. In addition, the laminated sound absorption member of the present invention has a lighter weight than sound absorption members constituted of porous materials, glass fibers, or the like. Therefore, weight reduction and space saving of the members can be achieved, which is particularly useful for sound absorption members for the field of automobiles.

[Brief Description of Drawings]

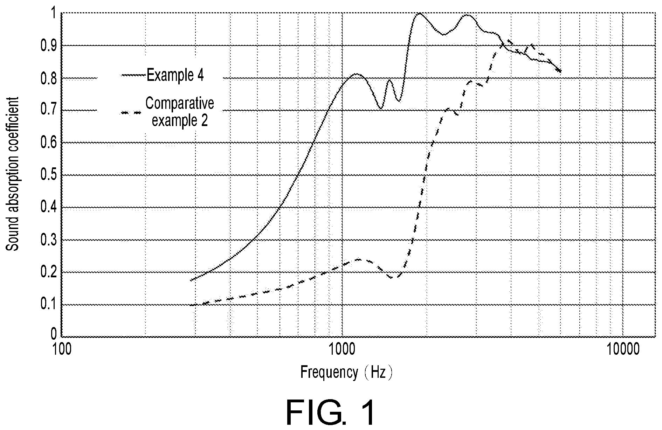

Fig. 1 is a graph showing sound absorption characteristics of an example (Example 4) and a comparative example (Comparative Example 2) of the present invention.

[Description of Embodiment]

Hereinafter, the present invention will be described in detail.

(Constitution of laminated sound absorption member)

A laminated sound absorption member of the present invention is a laminated sound absorption member including a plurality of fiber layers, and a base material layer that is positioned between a fiber layer and another fiber layer. The laminated sound absorption member includes at least two fiber layers. Each of the fiber layers is constituted of fibers having an average fiber diameter within a range of 500 nm to smaller than 35 $\mu$m, basis weights within a range of 10 g/m$^2$ to 500 g/m$^2$, and ventilation rates of 950 $\mu$m/Pa·sec or lower. A thickness is smaller than 2.9 mm. The base material layer is at least one selected from the group consisting of a non-woven fabric and a woven fabric and has a basis weight within a range of 80 g/m$^2$ to 800 g/m$^2$ and a thickness within a range of 2.9 mm to 20 mm. In this manner, the laminated sound absorption member of the present invention is constituted to include a base material layer and fiber layers. Two or more fiber layers are included, and a base material layer is positioned between the fiber layers.

In the laminated sound absorption member, two or more fiber layers are included. Specifically, two to four layers can be provided. However, from the viewpoint of reducing the thickness of the sound absorption member, it is more preferable to provide two layers. Each of the fiber layers may be one fiber assembly, or a form in which a plurality of fiber assemblies overlaps in one fiber layer may be adopted.

In addition, in the laminated sound absorption member, a base material layer is positioned between a fiber layer and another fiber layer. Each of the base material layers may be constituted of one base material, or a form in which a plurality of base materials overlaps may be adopted.

Each of the fiber layers and the base material layer included in the laminated sound absorption member may be one kind, or fiber layers or base material layers of two or more different kinds may be included therein. In addition, as long as the effects of the present invention are not impaired, a constitution other than the fiber layers and the base material layer may be included. For example, an additional fiber layer (which may be one, two, or more layers) beyond the range stipulated in the present invention, a printed layer, a foam body, a foil, a mesh, a woven fabric, or the like may be included therein. In addition, an adhesive layer, a clip, a suture thread, or the like for joining layers to each other may be included therein.

The layers of the laminated sound absorption member may be adhered to each other physically and/or chemically or may not be adhered to each other. A form in which some of a plurality of layers in the laminated sound absorption member are adhered to each other and some are not adhered to each other may be adopted. Regarding adhering, for example, the fiber layers and the base material layer may be adhered to each other by performing heating in a step of forming a fiber layer or as a follow-up step, melting some fibers constituting the fiber layers, and fusing the fiber layers to the base material layer. In addition, it is also preferable that layers be adhered to each other by applying an adhesive to surfaces of the base material layer and the fiber layers and overlaying the base material layer and the fiber layers.

The thickness of the laminated sound absorption member is not particularly limited as long as the effects of the present invention can be achieved. For example, it can be within a range of 3 mm to 50 mm, is preferably within a range of 3 mm to 40 mm, and is more preferably within a range of 3 mm to 30 mm from the viewpoint of space saving. The thickness of the laminated sound absorption member typically denotes the sum of thicknesses of the fiber layers and the base material layer, and when an exterior body such as a cartridge or a lid is attached, the thickness thereof is not included.

The ventilation rate of the laminated sound absorption member is not particularly limited as long as desired sound absorption performance can be achieved. However, it can be within a range of 10 $\mu$m/Pa·s to 1,000 $\mu$m/Pa·s and is preferably within a range of 10 $\mu$m/Pa·s to 500 $\mu$m/Pa·s. In addition, it is preferable that the ventilation rates of the fiber layers be lower than the ventilation rate of the base material layer. In other words, it is preferable to have a structure in which a layer (base material layer) having a relatively high ventilation rate is sandwiched between layers (fiber layers) having a lower ventilation rate. In the related art, lower air permeability is considered to make sound less likely to pass, that is, sound insulation properties are more effective, in an sound absorption member in which sound insulation performance is expected as well as sound absorption performance. However, in the laminated sound absorption member of the present invention, reflection of sound is reduced due to high air permeability, and high sound absorption properties can be obtained by further employing fiber layers having exceptional sound absorption properties. Regarding adjustment of the ventilation rate, for example, fiber layers having high densities and low air permeability can be obtained by causing fibers constituting the fiber layers to have small diameters. In addition, air permeability can also be adjusted by methods such as embossing and heat pressurizing. The ventilation rate can be measured by a known method. For example, it can be measured by a Gurley tester method.

The laminated sound absorption member has a laminated structure in which a base material layer is sandwiched between fiber layers. In the case of such a form, a distance between a fiber layer and another fiber layer (which will also be referred to as a thickness of a base material layer or an interlayer distance) is preferably within a range of 2.9 mm to 20 mm and is more preferably within a range of 2.9 mm to 15 mm. If the interlayer distance is 2.9 mm or longer, the sound absorption performance in a low-frequency range becomes favorable. If the interlayer distance is 20 mm or shorter, an sound absorption member which is exceptional in space saving can be obtained while preventing the sound absorption member from having an excessively large thickness. It is preferable that the sound absorption member of the present invention typically have a structure in which a thick base material layer is sandwiched between a thin fiber layer and another thin fiber layer, and it is preferable that the thickness of the base material layer occupy a greater part of the thickness of the laminated sound absorption member.

(Constitution of each layer: fiber layer)

The fiber layer included in the laminated sound absorption member of the present invention is a layer constituted of fibers having an average fiber diameter within a range of 500 nm to smaller than 5 $\mu$m. It is preferable that the fiber layer be a layer constituted of fibers having an average fiber diameter within a range of 500 nm to smaller than 3 $\mu$m. An average fiber diameter being within a range of 500 nm to smaller than 5 $\mu$m denotes that the average fiber diameter is within this numerical range. If the fiber diameters are within a range of 500 nm to 5 $\mu$m, high sound absorption properties can be obtained, which is preferable. The fiber diameters can be measured by a known method. For example, the fiber diameters are values obtained by measurement or calculation from an enlarged photo of surfaces of fiber layers. A specific measuring method will be described in examples in detail.

In the fiber layers included in the laminated sound absorption member of the present invention, one fiber layer may be constituted of one fiber assembly. In addition, a layer in which a plurality of fiber assemblies is included in one fiber layer and layers of fiber assemblies overlap each other forms one fiber layer. In this specification, a fiber assembly denotes a fiber assembly in one continuous body. The basis weight of the fiber layer is preferably within a range of 10 g/m$^2$ to 500 g/m$^2$ and is more preferably within a range of 10 g/m$^2$ to 200 g/m$^2$. If the basis weight is 10 g/m$^2$ or greater, a flow resistance due to the difference between densities of the fiber layers and the base material layer is favorably controlled. If the basis weight is smaller than 500 g/m$^2$, an sound absorption member has exceptional productivity. The thickness of the fiber layer is smaller than 2.9 mm. It is preferable to be thinner from the viewpoint of reducing the thickness of the sound absorption member. The thickness thereof can be preferably smaller than 2.0 mm, more preferably smaller than 1.0 mm, and particularly preferably smaller than 700 μm.

A non-woven fabric constituting the fiber layer is characterized in that the layer has thinner and denser fiber diameters than the base material layer. For example, the ventilation rate of the fiber layer can be 950 μm/Pa·s or lower and is preferably within a range of 10 μm/Pa·s to 600 μm/Pa·s.

A fiber assembly constituting the fiber layer is preferably a non-woven fabric and is not particularly limited as long as it has fiber diameters and a basis weight within the foregoing range. However, it is preferably a melt-blown non-woven fabric, a non-woven fabric formed by an electrospinning method, or the like. According to the melt-blown non-woven fabric, fibers having small diameters can be laminated efficiently on the base material. A specific melt-blown non-woven fabric will be described in detail with a manufacturing method.

A resin constituting the fiber layer is not particularly limited as long as the effects of the invention can be achieved. Examples thereof include polyolefin-based resins; polyesters such as polyurethane, polylactic acid, acrylic acid, polyethylene terephthalate, and polybutylene terephthalate; nylons (amide resins) such as nylon 6, nylon 6,6, and nylon 1,2; polyphenylene sulfide, polyvinyl alcohol, polystyrene, polysulfone, liquid crystal polymers, polyethylene-vinyl acetate copolymers; polyacrylonitrile; polyvinylidene fluoride; and polyvinylidene fluoride-hexafluoropropylene, and the like. Examples of polyolefin-based resins can include polyethylene resins and polypropylene resins. Examples of polyethylene resins can include low density polyethylene (LDPE), high density polyethylene (HDPE), and linear low density polyethylene (LLDPE). Examples of polypropylene resins can include homopolymers of propylene, and copolypropylene in which propylene is polymerized with other monomers, ethylene, or butene. It is preferable that a fiber assembly include one kind of the foregoing resins, but it may include two or more kinds.

In addition, the foregoing fibers may include various additives other than resins. Examples of additives which can be added to the resin include a filler, a stabilizer, a plasticizer, an agglutinant, an adhesion promoter (for example, silane or titanate), silica, glass, clay, talc, a pigment, a colorant, an antioxidant, a fluorescent brightener, an antibacterial agent, a surfactant, a flame retardant, and a fluoropolymer. Using one or more of the foregoing additives, weights and/or costs of obtained fibers and layers may be reduced, viscosity may be adjusted, thermal characteristics of fibers may be denatured, or various physical characteristic activities derived from characteristics of the additives including characteristics related to electrical characteristics, optical characteristics, and densities, and characteristics related to liquid barriers or stickiness may be applied.

(Constitution of each layer: base material layer)

The base material layer in the laminated sound absorption member of the present invention has sound absorption properties and has a function of supporting the fiber layers and holding the shape of the sound absorption member in its entirety. The base material layer may be constituted of a base material in one layer, or a form in which a plurality of base materials overlaps may be adopted.

The base material constituting the base material layer is not particularly limited as long as a fiber assembly can be laminated on at least a surface of one thereof, and at least one selected from the group consisting of a non-woven fabric and a woven fabric can be used. Particularly, the base material layer is preferably constituted of a non-woven fabric. The base material included in the laminated sound absorption member may be one kind, and it is also preferable to include two or more kinds of base materials. Since it is particularly preferable that these have air permeability, when the air permeability is low, it is preferable to have an opening.

When the base material is a non-woven fabric, regarding the kind of the non-woven fabric, a melt-blown non-woven fabric, a spunlaced non-woven fabric, a spunbond non-woven fabric, a through-air non-woven fabric, a thermal bond non-woven fabric, a needle punch non-woven fabric, or the like can be used, and the kind can be suitably selected based on desired physical properties or functions.

A thermoplastic resin can be used as a resin constituting the fibers of the non-woven fabric. Examples thereof can include polyolefin-based resins, polyester-based resins such as polyethylene terephthalate, and polyamide-based resins. Examples of polyolefin-based resins can include homopolymers such as ethylene, propylene, butene-1, and 4-methylpentene-1; random or block copolymers of these and other α-olefins, that is, one or more of ethylene, propylene, butene-1, pentene-1, hexene-1, 4-methylpentene-1, and the like; copolymers in which these are combined; and mixtures of these. Examples of polyamide-based resins can include nylon 4, nylon 6, nylon 7, nylon 1,1, nylon 1,2, nylon 6,6, nylon 6,10, polymethaxylidene adipamide, polyparaxylidene decanamide, polybiscyclohexylmethanedecaneamide, and copolyamide of these. In addition to polyethylene terephthalate, examples of polyester-based resins can include polytetramethylene terephthalate, polybutyl terephthalate, polyethylene oxybenzoate, poly(1,4-dimethylcyclohexane terephthalate), and copolymers of these. Among these, it is preferable to use one, or two or more in combination of polyethylene terephthalate fibers, polybutylene terephthalate fibers, polyethylene fibers, and polypropylene fibers. Moreover, it is also preferable to use glass fibers, aramid fibers, polybenzoxazole fibers, aluminum fibers, or a non-woven fabric or a mat having heat resistant organic fibers of which a melting temperature or a pyrolysis temperature is 370°C or higher. Examples thereof include one, two, or more organic fibers selected from aramid fibers, polyarylate fibers, polybenzoxazole (PBO) fibers, polybenzothiazole fibers, polybenzimidazole (PBI) fibers, polyimide fibers, polyetherimide fibers, polyetheretherketone fibers, polyetherketone fibers, polyetherketone ketone fibers, polyamideimide fibers, and flame-resistant fibers.

Similar resins can be used when the base material is a woven fabric as well.

Fibers constituted of only a single component can be used as fibers constituting the non-woven fabric of the base material layer. However, in consideration of effects of fusion of intersections between fibers, it is also preferable to use fibers constituted of a composite component of a low-melting point resin and a high-melting point resin, that is, composite fibers constituted of two or more components having different melting points. Examples of composite forms can include a sheath-core type, an eccentric sheath-core type, and a parallel type. In addition, it is also preferable to use mixed fibers of two or more components having different melting points as fibers constituting the non-woven fabric of the base material layer. Mixed fibers denote fibers in which fibers constituted of a high-melting point resin and fibers constituted of a low-melting point resin are independently present and mixed. Similar fibers can be used when the base material is a woven fabric as well.

The average fiber diameter of fibers constituting the non-woven fabric of the base material is not particularly limited. A non-woven fabric constituted of fibers having an average fiber diameter within a range of 1 μm to 1 mm can be used. An average fiber diameter within a range of 1 μm to 1 mm denotes that the average fiber diameter is within this numerical range. If the average fiber diameter is 1 μm or larger, the flow resistance due to the difference between densities of fibers constituting the fiber layers and the base material layer can be controlled. If it is smaller than 1 mm, versatility is not impaired, and procurement also becomes easy, which is preferable. If the average fiber diameter is within a range of 1.0 μm to 100 μm, the flow resistance due to the difference between densities of fibers of the fiber layers and the base material can be controlled, and procurement also becomes easy, which is more preferable. The fiber diameters can be measured by a method similar to that of measuring the fiber diameters of the fiber layers. Here, the flow resistance is an index indicating the difficulty of a flow of air flowing through the sound absorption member. Fibers having similar fiber diameters can be used when the base material is a woven fabric as well.

The base material layer is positioned between a fiber layer and another fiber layer. In addition, the base material layer may be included as a layer positioned at an outermost layer of the laminated sound absorption member, in addition to being positioned between a fiber layer and another fiber layer. The base material may constitute the base material layer with only one layer, and it is also preferable that two or more layers thereof be continuously disposed to constitute one base material layer. When two or more layers of the base material are continuously disposed, there is an advantage in that the interlayer distance of the layers can be controlled by the thickness of the base material layer.

The basis weight of the base material layer is within a range of 80 g/m² to 800 g/m² and is preferably within a range of 80 g/m² to 500 g/m². If the basis weight of the base material is 80 g/m² or greater, strength required for the sound absorption member can be obtained.

In the present invention, the base material layer has a thickness of 2.9 mm or larger. The upper limit for the thickness of the base material layer is not particularly limited. However, from the viewpoint of space saving, it is preferably within a range of 2.9 mm to 60 mm and is more preferably within a range of 2.9 mm to 30 mm. For example, the thickness of the base material constituting the base material layer can be within a range of 20 μm to 20 mm and is preferably within a range of 30 μm to 10 mm. If the thickness of the base material is 20 μm or larger, wrinkles are not generated, it can be easily handled, and productivity becomes favorable. If the thickness of the base material is 20 mm or smaller, there is no concern of it becoming a hindrance to space saving.

The base material layer is a layer having a lower density than the fiber layers and having air permeability and a thick body, and it is assumed that reflection of sound is reduced due to this constitution, which contributes to sound absorption properties. For example, the ventilation rate of the base material layer can be 1,000 μm/Pa·s or higher.

Within a range not hindering the effects of the present invention, for example, various additives such as a colorant, an antioxidant, a light stabilizer, a UV absorber, a neutralizer, a nucleating agent, a lubricant, an antibacterial agent, a flame retardant, a plasticizer, and other thermoplastic resins may be added to the base material layer. In addition, a surface may be processed using various finishing agents, and functions such as water repellency, antistatic properties, surface smoothness, and wear resistance may be applied due to this processing.

(Sound absorption characteristics of laminated sound absorption member)

The laminated sound absorption member of the present invention is characterized in that sound absorption properties are exceptional particularly in a low-frequency range (a frequency range of 1,000 Hz or lower), an intermediate-frequency range (a frequency range of 800 Hz to 2,000 Hz), and a high-frequency range (a frequency range of 2,000 Hz to 5,000 Hz). The laminated sound absorption member of the present invention manifests sound absorption characteristics being exceptional particularly in sound absorption properties within a range of 400 Hz to 1,000 Hz, different from those of sound absorption members in the related art. The laminated sound absorption member of the present invention is not restricted by any particular theory. However, it is assumed that the performance such as reduction in thickness and exceptional absorbability in a low-frequency range and an intermediate-frequency range can be obtained as a result of utilizing the difference between densities of the fiber layers and the base material layer, controlling the flow resistance of sound waves, and utilizing transmission, reflection, and interference of sound waves.

A method of evaluating sound absorption properties will be described in detail with examples.

(Method of manufacturing laminated sound absorption member)

A method of manufacturing a laminated sound absorption member is not particularly limited. For example, a laminated sound absorption member can be obtained by a manufacturing method including a step of producing a fiber layer forming one layer of a fiber assembly on one base material layer, and a step of overlapping and integrating a plurality of fiber layers in a predetermined order and a predetermined number of layers. In the step of overlapping the fiber layers, an additional layer (for example, an additional base material layer) other than the fiber layers can also be added and laminated.

When a non-woven fabric is used as the base material layer, a non-woven fabric may be manufactured by a known method, or a commercially available non-woven fabric can be selected and used. In the step of forming a fiber layer on the base material layer, it is preferable to use a melt-blown method or an electrospinning method. In addition, when a woven fabric is used as the base material layer, a woven fabric may be manufactured by a known method, or a commercially available woven fabric can be selected and used.

A melt-blown method is a method in which a non-woven fabric is formed by extruding and spraying a resin which becomes a fiber layer on a base material layer from a nozzle in a molten state using heated compressed air. For example, a non-woven fabric can be manufactured using two extruders having a screw, a heating element, and a gear pump, a combined filament spinneret, a compressed air generation apparatus, an air heater, a collection conveyor including a polyester net, and a non-woven fabric manufacturing apparatus constituted of a winder. The basis weight can be set arbitrarily by adjusting the speed of a conveyor for conveying a base material layer. A resin used for spinning is not particularly limited as long as it has a thermal plasticity and has spinnability.

The electrospinning method is a method in which fibers are obtained on a collector by discharging a spinning solution such that an electrical field acts for fibril formation of the discharged spinning solution. Examples thereof can include a spinning method in which a spinning solution is extruded from a nozzle such that an electrical field acts, a spinning method in which a spinning solution is frothed such that an electrical field acts, and a spinning method in which a spinning solution is introduced to a surface of a cylindrical electrode such that an electrical field acts. In the present invention, a non-woven fabric or the like which becomes a base material is inserted on a collector, and fibers can be accumulated on the base material. A spinning solution is not particularly limited as long as it has spinnability. A solution in which a resin is distributed in a solvent, a solution in which a resin is dissolved in a solvent, a solution in which a resin is melted due to heat or laser irradiation, or the like can be used.

For the purpose of improvement of stability of spinning or fiber formability, a surfactant may be further contained in a spinning solution. Examples of a surfactant can include an anionic surfactant such as sodium dodecyl sulfate, a cationic surfactant such as tetrabutyl ammonium bromide, and a nonionic surfactant such as polyoxyethylene sorbitan monolaurate. The concentration of a surfactant is preferably within a range of 5 weight% or lower with respect to the spinning solution. If the concentration thereof is 5 weight% or lower, an effect suitable for use can be obtained, which is preferable. In addition, as long as the concentration thereof is within a range not significantly impairing the effects of the present invention, components other than those described above may also be included as components of a spinning solution.

A method in which a plurality of fiber laminates obtained through the foregoing process and constituted of two layers (a base material layer and a fiber layer) is integrated in an overlapping manner is not particularly limited. They may only overlap each other without performing adhering. In addition, various adhering methods, that is, thermo-compression adhering using a heated flat roll or an embossing roll, adhering using a hot-melt adhesive or a chemical adhesive, thermal adhering using circulating hot air or radiant heat, or the like can be employed. From the viewpoint of curbing deterioration in physical properties of the fiber layer, among these, it is preferable to adopt heat treatment using circulating hot air or radiant heat. In the case of thermo-compression adhering using a flat roll or an embossing roll, the fiber layer may be melted and film-formed, resulting in damage such as fractures occurring in parts around embossed points, and therefore there is a possibility of difficulty in stable manufacturing. Furthermore, deterioration in performance such as deterioration in sound absorption characteristics is likely to occur. In addition, in the case of adhering using a hot melt adhesive or a chemical adhesive, gaps between fibers of the fiber layer is filled with the component thereof, so that deterioration in performance may be likely to occur. On the other hand, in the case of the heat treatment integration using circulating hot air or radiant heat, there is less damage to the fiber layer and integration can be performed with sufficient delamination strength, which is preferable. In the case of the heat treatment integration using circulating hot air or radiant heat, there is no particular limitation, and it is preferable to use a non-woven fabric and a laminate constituted of thermal adhesive composite fibers.

EXAMPLES

Hereinafter, the present invention will be described in more detail with examples. However, the following examples are merely given for the purpose of examples. The scope of the present invention is not limited by the present examples.

A measuring method and definitions of physical property values used in the examples will be described below.

<Average fiber diameter>

Fibers were observed using a scanning electron microscope SU 8020 manufactured by Hitachi High-Technologies Corporation, and the diameters of 50 fibers were measured using image analysis software. The average value of the fiber diameters of 50 fibers was taken as the average fiber diameter.

<Sound absorption coefficient measurement 1>

A sample having a diameter of 63 mm was collected from each fiber laminate, and a vertical incident sound absorption coefficient when plane sound waves were perpendicularly incident on a test piece within a frequency range of 200 Hz to 3,200 Hz was measured using a vertical incident sound absorption coefficient measuring apparatus "TYPE 4206, manufactured by BRUEL & KJÆR", conforming to ASTM E 1050 after being laminated under each of the conditions.

<Sound absorption properties in low-frequency range>

A sound absorption coefficient at a frequency x within a range of 200 Hz to 3,200 Hz was measured at intervals of 1 Hz, and when an obtained curve was f(x), an integrated value S within a range of 200 Hz to 1,000 Hz could be obtained by the following mathematical expression.

[Math. 1]

$$S = \int_{200}^{1000} f(x)\, d\,x$$

The integrated value S indicates sound absorption performance in a frequency range of 200 Hz to 1,000 Hz, and when the numerical value was high, it was determined that the sound absorption properties were high. When the value S was 170 or larger, the sound absorption properties in a low-frequency range were evaluated as favorable (o), and when it was smaller than 170, the sound absorption properties were evaluated to be poor ($\times$).

<Sound absorption properties in intermediate-frequency range>

A sound absorption coefficient at a frequency x within a range of 800 Hz to 2,000 Hz was measured at intervals of 1 Hz, and when an obtained curve was f(x), an integrated value T of the sound absorption coefficient within a range of 800 Hz to 2,000 Hz could be obtained by the following mathematical expression.

[Math. 2]

$$T = \int_{800}^{2000} f(x)\, d\,x$$

The integrated value T indicates sound absorption performance in a frequency range of 800 Hz to 2,000 Hz, and when the numerical value was high, it was determined that the sound absorption properties were high. When the value T was 840 or larger, the sound absorption properties in an intermediate-frequency range were evaluated as favorable (o), and when it was smaller than 840, the sound absorption properties ware evaluated to be poor ($\times$).

<Sound absorption coefficient measurement 2>

A sample having a diameter of 40 mm was collected from each fiber laminate, and a vertical incident sound absorption coefficient when plane sound waves were perpendicularly incident on a test piece within a frequency range of 2,000 Hz to 5,000 Hz was measured using a vertical incident sound absorption coefficient measuring apparatus "WinZac MTX, manufactured by Nihon Onkyo Engineering Co., Ltd.", conforming to ASTM E 1050 after being laminated under each of the conditions.

<Sound absorption properties in high-frequency range>

A sound absorption coefficient at a frequency x within a range of 200 Hz to 5,000 Hz was measured at intervals of 3.6 Hz, and when an obtained curve was f2(x), an integrated value U of the sound absorption coefficient within a range of 2,000 Hz to 5,000 Hz could be obtained by the following mathematical expression.

[Math. 3]

$$U = \int_{2000}^{5000} f_2 \left( x \right) d x$$

The integrated value U indicates sound absorption performance in a frequency range of 2,000 Hz to 5,000 Hz, and when the numerical value was high, it was determined that the sound absorption properties were high. When the value U was 2,100 or larger, the sound absorption properties in a high-frequency range were evaluated as favorable (o), and when it was smaller than 2,100, the sound absorption properties were evaluated to be poor ($\times$).

<Ventilation rate>

The ventilation rate was measured using a Gurley type densometer (type: GB-3C) manufactured by Toyo Seiki Seisaku-sho, Ltd., conforming to ISO 5636.

<MFR>

MFR of a polypropylene resin is a value measured at 230°C under a loading condition of 2,160 g, conforming to JIS K 7210 (1999).
MFR of a polyethylene resin is a value measured at 190°C under a loading condition of 2,160 g, conforming to JIS K 7210 (1999).

[Example 1]

High-density polyethylene "M6900" (MFR 17 g/10 min) manufactured by KEIYO Polyethylene Co., Ltd. was used as a high-density polyethylene resin, and a polypropylene homopolymer "SA3A" (MFR=11 g/10 min) manufactured by Japan Polypropylene Corporation was used as a polypropylene resin. Sheath-core type thermal adhesive composite fibers in which a sheath component having a fiber diameter of 50 $\mu$m is constituted of a high-density polyethylene resin and a core component is constituted of a polypropylene resin were prepared by a heat-melting spinning method. A through-air non-woven fabric having a basis weight of 200 g/m$^2$, a thickness of 5 mm, and a width of 1,000 mm was prepared by a card method using the obtained sheath-core type thermal adhesive composite fibers, and this was adopted as a base material layer A.
A process similar to the foregoing process was performed except that the basis weight was set to 220 g/m$^2$. A through-air non-woven fabric having a thickness of 7 mm and a width of 1,000 mm was prepared by a card method, and this was adopted as a base material layer B.
When the fiber layer was formed, a non-woven fabric manufacturing apparatus constituted of two extruders having a screw (diameter of 50 mm), a heating element, and a gear pump, a combined filament spinneret (having hole diameters of 0.3 mm, 501 holes arranged in a row for the two extruders alternately discharging resins, and effective width of 500 mm), a compressed air generation apparatus, an air heater, a collection conveyor including a polyester net, and a winder were used.
A polypropylene homopolymer 1 (MFR=82 g/10 min) and a polypropylene homopolymer 2 ("FR-185", manufactured by LOTTE Chemical Corporation (MFR=1,400 g/10 min)) were used as polypropylene resins which are raw materials for the fiber layer. Two kinds of polypropylene resins were input to two extruders (non-woven fabric manufacturing apparatuses), heating and melting were performed using the extruders at 240°C, the mass ratio of the gear pump was set to 50/50, and a molten resin was discharged at a spinning speed of 0.3 g/min per hole from the spinneret. The discharged fibers were sprayed on the collection conveyor at a distance of 30 cm from the spinneret using compressed air of 98 kPa (gauge pressure) heated at 400°C, and a fiber layer was formed. The basis weight was arbitrarily set by adjusting the speed of the collection conveyor. The average fiber diameter was 1.8 $\mu$m, the basis weight of the fiber layer was 80 g/m$^2$, and the thickness was 0.6 mm.

The obtained fiber layers and the base material layer were used such that they overlap in the order of the fiber layer, the base material layer A, and the fiber layer. They were cut into circular shapes having diameters of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) ware evaluated. The value was 339, which was favorable. The sound absorption properties in an intermediate-frequency range (the integrated value T within a range of 800 Hz to 2,000 Hz) were evaluated, and the value was 1011, which was favorable. The sound absorption properties in a high-frequency range (the integrated value U within a range of 2,000 Hz to 5,000 Hz) were evaluated, and the value was 2602, which was favorable.

[Example 2]

A process similar to that in Example 1 was performed except that the base material layer B was used, and the fiber layers and the base material layer were used such that they were laminated in the order of the fiber layer, the base material layer B, and the fiber layer. They were cut into circular shapes having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 291, which was favorable. The sound absorption properties in an intermediate-frequency range (the integrated value T within a range of 800 Hz to 2,000 Hz) were evaluated, and the value was 1002, which was favorable. The sound absorption properties in a high-frequency range (the integrated value U within a range of 2,000 Hz to 5,000 Hz) were evaluated, and the value was 2503, which was favorable.

[Example 3]

A process similar to that in Example 1 was performed except that two base material layers A were used, and the fiber layers and the base material layer were used such that they were laminated in the order of the fiber layer, the base material layer A, the base material layer A, and the fiber layer. They were cut into circular shapes having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 378, which was favorable. The sound absorption properties in an intermediate-frequency range (the integrated value T within a range of 800 Hz to 2,000 Hz) were evaluated, and the value was 1038, which was favorable. The sound absorption properties in a high-frequency range (the integrated value U within a range of 2,000 Hz to 5,000 Hz) were evaluated, and the value was 2511, which was favorable.

[Example 4]

A process similar to that in Example 1 was performed except that two base material layers B were used, and the fiber layers and the base material layer were used such that they were laminated in the order of the fiber layer, the base material layer B, the base material layer B, and the fiber layer. They were cut into circular shapes having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 394, which was favorable. The sound absorption properties in an intermediate-frequency range (the integrated value T within a range of 800 Hz to 2,000 Hz) were evaluated, and the value was 1062, which was favorable. The sound absorption properties in a high-frequency range (the integrated value U within a range of 2,000 Hz to 5,000 Hz) were evaluated, and the value was 2446, which was favorable.

[Comparative Example 1]

A process similar to that in Example 1 was performed except that one fiber layer and one base material layer were used, and they were laminated in the order of the fiber layer and the base material layer A. They were cut into circular shapes having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 87, which was poor. The sound absorption properties in an intermediate-frequency range (the integrated value T within a range of 800 Hz to 2,000 Hz) were evaluated, and the value was 554, which was poor. The sound absorption properties in a high-frequency range (the integrated value U within a range of 2,000 Hz to 5,000 Hz) were evaluated, and the value was 2645, which was favorable.

[Comparative Example 2]

A process similar to that in Example 1 was performed except that two fiber layers were used, and they were laminated in the order of the fiber layer and the fiber layer. They were cut into circular shapes having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 167, which was poor. The sound absorption properties in an intermediate-frequency range (the integrated value T within a range of 800 Hz to 2,000 Hz) were evaluated, and the value was 897, which was favorable. The sound absorption properties in a high-frequency range (the integrated value U within a range of 2,000 Hz to 5,000 Hz) were evaluated, and the value was 2294, which was favorable.

[Comparative Example 3]

A commercially available polypropylene resin non-woven fabric (Thinsulate T2203, manufactured by 3M Company, a fiber diameter within a range of 0.7 $\mu$m to 4.0 $\mu$m and a thickness of 29 mm) was punched into circular shapes having a diameter of 63 mm. The sound absorption coefficient was measured, and the sound absorption properties in a low-frequency range (the integrated value S within a range of 200 Hz to 1,000 Hz) were evaluated. The value was 129, and the sound absorption properties in a low-frequency range could not obtained, which was poor. The sound absorption properties in an intermediate-frequency range (the integrated value T within a range of 800 Hz to 2,000 Hz) were evaluated, and the value was 804, which was poor. The sound absorption properties in a high-frequency range (the integrated value U within a range of 2,000 Hz to 5,000 Hz) were evaluated, and the value was 2580, which was favorable.

Examples 1 to 4 and Comparative Examples 1 to 3 are summarized in Table 1.

[Table 1]

| | | Example 1 | Example 2 | Example 3 | Example 4 | Comparative Example 1 | Comparative Example 2 | Comparative Example 3 |
|---|---|---|---|---|---|---|---|---|
| Fiber layer | Number of layers, fiber layer | 2 | 2 | 2 | 2 | 1 | 2 | 1 |
| | Kind of fibers | PP | PP | PP | PP | PP | PP | PP |
| | Fiber diameter (μm) | 0.7 to 28 | 0.7 to 28 | 0.7 to 28 | 0.7 to 28 | 0.7 to 28 | 0.7 to 28 | - |
| | Average fiber diameter (μm) | 1.8 | 1.8 | 1.8 | 1.8 | 1.8 | 1.8 | - |
| | Air permeability (m/Pa·s) | 488 | 488 | 488 | 488 | 488 | 488 | 970 |
| Base material layer | Kind of based material layer | Base material layer A | Base material layer B | Base material layer A | Base material layer B | Base material layer A | - | - |
| | Interlayer distance (mm) | 5 | 7 | 10 | 14 | - | - | - |
| | Average fiber diameter (μm) | 50 | 50 | 50 | 50 | 50 | - | - |
| | Air permeability (m/Pa·s) | > 1,000 | > 1,000 | > 1,000 | > 1,000 | > 1,000 | - | - |
| Laminated sound absorption member | Total thickness (mm) | 6.2 | 8.2 | 11.2 | 15.2 | 5.6 | 1.2 | 29 |
| | Integrated value within 200 Hz to 1,000 Hz | 339 | 291 | 378 | 394 | 87 | 167 | 129 |
| | Low-frequency sound absorption properties | ○ | ○ | ○ | ○ | × | × | × |
| | Integrated value within 800 Hz to 2,000 Hz | 1011 | 1002 | 1038 | 1062 | 554 | 897 | 804 |
| | Intermediate-frequency sound absorption properties | ○ | ○ | ○ | ○ | × | ○ | × |
| | Integrated value within 2,000 Hz to 5,000 Hz | 2602 | 2503 | 2511 | 2446 | 2645 | 2294 | 2580 |
| | High-frequency sound absorption properties | ○ | ○ | ○ | ○ | ○ | ○ | ○ |
| | Space saving | ○ | ○ | ○ | ○ | ○ | ○ | × |
| | Air permeability (m/Pa·s) | 220 | 220 | 220 | 220 | 488 | 216 | 970 |
| | Total basis weight (gsm) | 160 + 200 | 160 + 220 | 160 + 400 | 160 + 440 | 80 + 200 | 160 | 240 |

As shown in Table 1, all the laminated sound absorption members in Examples 1 to 4 of the present invention were exceptional in low-frequency sound absorption properties, intermediate-frequency sound absorption properties, high-frequency sound absorption properties, and space saving. On the other hand, in Comparative Example 1 having a structure in which only one fiber layer was provided such that the base material layer is not sandwiched between fiber layers, the sound absorption properties were insufficient. In addition, in Comparative Example 2 constituted of only two fiber layers without having a base material layer sandwiched therebetween, intermediate-frequency sound absorption properties were exceptional but low-frequency sound absorption properties were insufficient. Moreover, in Comparative Example 3 having a single-layer sound absorption member constituted of only fibers having relatively small diameters, although the thickness was increased, the low-frequency sound absorption properties and the intermediate-frequency sound absorption properties were insufficient.

[Example 5]

As a commercially available glass fiber material, ACLEAR MAT (manufactured by ASAHI Fiber Glass Co., Ltd.) having a thickness of 50 mm was processed to have a basis weight of 160 g/m$^2$ and a thickness of 10 mm, and a base material C was obtained. The obtained base material C and the fiber layer obtained in Example 1 were used such that they overlap in the order of the fiber layer, the base material layer C, and the fiber layer. They were cut into circular shapes having diameters of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 380, which was favorable. The sound absorption properties in an intermediate-frequency range (the integrated value T within a range of 800 Hz to 2,000 Hz) were evaluated, and the value was 1045, which was favorable. They were cut into circular shapes having diameters of 40 mm, and a sample for evaluating the high-frequency sound absorption properties was prepared. The sound absorption properties in a high-frequency range (the integrated value U within a range of 2,000 Hz to 5,000 Hz) were evaluated, and the value was 2494, which was favorable.

[Comparative Example 4]

The base material C obtained in Example 5 was used, and only the base material layer C is cut into a circular shape having a diameter of 63 mm, and a sample for measuring a sound absorption coefficient was produced. The vertical incident sound absorption coefficient was measured, and the sound absorption properties in a low-frequency range (the integrated value S within a range of 200 Hz to 1,000 Hz) were evaluated. The value was 120. The sound absorption properties in an intermediate-frequency range (the integrated value T within a range of 800 Hz to 2,000 Hz) were evaluated, and the value was 745. It was cut into a circular shape having a diameter of 40 mm, and a sample for evaluating the high-frequency sound absorption properties was prepared. The sound absorption properties in a high-frequency range (the integrated value U within a range of 2,000 Hz to 5,000 Hz) were evaluated, and the value was 2140, which was favorable.

Example 5 and Comparative Example 4 are summarized in Table 2.

[Table 2]

| | | Example 5 | Comparative Example 4 |
|---|---|---|---|
| Fiber layer | Number of layers, fiber layer | 2 | - |
| | Kind of fibers | PP | - |
| | Fiber diameter (μm) | 0.7 to 28 | - |
| | Average fiber diameter (μm) | 1.8 | - |
| | Air permeability (m/Pa·s) | 488 | - |
| Base material layer | Kind of based material layer | Base material layer C | Base material layer C |
| | Interlayer distance (mm) | 10 | 10 |
| | Average fiber diameter (μm) | 5 | 5 |
| | Density (kg/m$^3$) | 16 | 16 |
| | Air permeability (m/Pa·s) | > 1,000 | > 1,000 |

(continued)

| | | Example 5 | Comparative Example 4 |
|---|---|---|---|
| Laminated sound absorption member | Total thickness (mm) | 11.2 | 10 |
| | Integrated value within 200 Hz to 1,000 Hz | 380 | 120 |
| | Low-frequency sound absorption properties | ○ | × |
| | Integrated value within 800 Hz to 2,000 Hz | 1045 | 745 |
| | Intermediate-frequency sound absorption properties | ○ | × |
| | Integrated value within 2,000 Hz to 5,000 Hz | 2494 | 2140 |
| | High-frequency sound absorption properties | ○ | ○ |
| | Space saving | ○ | ○ |
| | Air permeability (m/Pa·s) | 220 | > 1,000 |
| | Total basis weight (gsm) | 160 + 160 | 160 |

[Industrial Applicability]

A laminated sound absorption member of the present invention is particularly exceptional in sound absorption properties over a low-frequency range to an intermediate-frequency range and in a high-frequency range. Therefore, the laminated sound absorption member can be utilized as an sound absorption member in the fields in which noise over a low-frequency range to an intermediate-frequency range becomes a problem. Specifically, the laminated sound absorption member can be used as an sound absorption member for ceilings, walls, floors, and the like of housings; soundproof walls for expressways, railway lines, and the like; a soundproof material for home appliances; an sound absorption member disposed in each part of railways or vehicles such as automobiles; and the like.

**Claims**

1.  A laminated sound absorption member comprising:

    a plurality of fiber layers; and
    a base material layer that is positioned between a fiber layer and another fiber layer,
    wherein the laminated sound absorption member includes at least two fiber layers,
    wherein each of the fiber layers is constituted of fibers having an average fiber diameter within a range of 500 nm to smaller than 5 $\mu$m, basis weights within a range of 10 g/m$^2$ to 500 g/m$^2$, and ventilation rates of 950 $\mu$m/Pa·sec or lower,
    wherein a thickness is smaller than 2.9 mm, and
    wherein the base material layer is at least one selected from the group consisting of a non-woven fabric and a woven fabric and has a basis weight within a range of 80 g/m$^2$ to 800 g/m$^2$ and a thickness within a range of 2.9 mm to 20 mm.

2.  The laminated sound absorption member according to claim 2,
    wherein the fiber layers have basis weights within a range of 10 g/m$^2$ to 200 g/m$^2$, and the base material layer has a basis weight within a range of 80 g/m$^2$ to 500 g/m$^2$.

3.  The laminated sound absorption member according to claim 1 or 2,
    wherein the thickness is 30 mm or smaller.

4.  The laminated sound absorption member according to any one of claims 1 to 3,
    wherein fibers forming the fiber layers are constituted of at least one selected from the group consisting of polyethylene, polypropylene, polyethylene terephthalate, polybutylene terephthalate, polytetrafluoroethylene, polyvinylidene fluoride, nylon 6,6, polyacrylonitrile, polystyrene, polyurethane, polysulfone, and polyvinyl alcohol.

**5.** The laminated sound absorption member according to any one of claims 1 to 4,
wherein a base material included in the base material layer is a non-woven fabric constituted of at least one selected from the group consisting of polyethylene terephthalate fibers, polybutylene terephthalate fibers, polyethylene fibers, polypropylene fibers, and glass fibers.

**6.** The laminated sound absorption member according to any one of claims 1 to 5,
wherein in a vertical incident sound absorption coefficient measurement method, a sound absorption coefficient at a frequency x within a range of 200 Hz to 3,200 Hz is measured at intervals of 1 Hz, and when an obtained curve is f(x), an integrated value S within a range of 200 Hz to 1,000 Hz is within a range satisfying the following expression,

$$S = \int_{200}^{1000} f(x)\, dx \geqq 170 \ .$$

**7.** The laminated sound absorption member according to any one of claims 1 to 6,
wherein in a vertical incident sound absorption coefficient measurement method, a sound absorption coefficient at a frequency x within a range of 200 Hz to 3,200 Hz is measured at intervals of 1 Hz, and when an obtained curve is f(x), an integrated value T within a range of 800 Hz to 2,000 Hz is within a range satisfying the following expression,

$$T = \int_{800}^{2000} f(x)\, dx \geqq 840 \ .$$

**8.** The laminated sound absorption member according to any one of claims 1 to 7,
wherein in a vertical incident sound absorption coefficient measurement method, a sound absorption coefficient at a frequency x within a range of 200 Hz to 5,000 Hz is measured at intervals of 3.6 Hz, and when an obtained curve is f2(x), an integrated value U within a range of 2,000 Hz to 5,000 Hz is within a range satisfying the following expression,

$$U = \int_{2000}^{5000} f_2(x)\, dx \geqq 2100 \ .$$

FIG. 1

## INTERNATIONAL SEARCH REPORT

| | International application No. |
|---|---|
| | PCT/JP2018/028291 |

**A. CLASSIFICATION OF SUBJECT MATTER**
Int.Cl. B32B5/26(2006.01)i

According to International Patent Classification (IPC) or to both national classification and IPC

**B. FIELDS SEARCHED**

Minimum documentation searched (classification system followed by classification symbols)
Int.Cl. B32B1/00-43/00, D04H1/00-18/04, G10K11/16

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/143857 A1 (TORAY INDUSTRIES, INC.) 15 September 2016, claims, examples & US 2018/0051403 A1 (claims, examples) & EP 3269860 A1 & KR 10-2017-0124553 A & CN 107429456 A | 1-8 |
| A | JP 2006-28708 A (ASAHI KASEI FIBERS CORP.) 02 February 2006, claims, examples (Family: none) | 1-8 |
| A | JP 2009-843 A (ASAHI KASEI FIBERS CORP.) 08 January 2009, claims, examples (Family: none) | 1-8 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 August 2018 (22.08.2018) | 04 September 2018 (04.09.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/028291 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-266445 A (DAIWABO CO., LTD.) 29 September 2005, claims, examples (Family: none) | 1-8 |
| A | JP 2009-512578 A (3M INNOVATIVE PROPERTIES CO.) 26 March 2009, claims, examples & JP 2014-15042 A & US 2008/0230309 A1 (claims, examples) & US 2010/0043639 A1 & WO 2007/047263 A1 & EP 1945445 A1 & KR 10-2008-0055929 A & KR 10-1367509 B & TW 200720085 A | 1-8 |
| A | JP 2017-81040 A (MITSUI CHEMICALS, INC.) 18 May 2017, claims, examples (Family: none) | 1-8 |
| A | JP 2016-142831 A (AUTONETWORKS TECHNOLOGIES, LTD.) 08 August 2016, claims, examples & US 2018/0022064 A1 (claims, examples) & WO 2016/121468 A1 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014015042 A
- JP 2015030218 A
- JP 2016137636 A